Europäisches Patentamt

(19) European Patent Office

Office européen des brevets

(11) Numéro de publication: **0 219 401**
**B1**

(12) **FASCICULE DE BREVET EUROPEEN**

(45) Date de publication du fascicule du brevet: **27.12.90**

(51) Int. Cl.⁵: **G 02 B 6/10, G 02 B 6/12**

(21) Numéro de dépôt: **86402087.0**

(22) Date de dépôt: **23.09.86**

(54) **Polariseur par absorption différentielle, son procédé de réalisation, et dispositif mettant en oeuvre ledit procédé.**

(30) Priorité: **27.09.85 FR 8514375**

(43) Date de publication de la demande:
**22.04.87 Bulletin 87/17**

(45) Mention de la délivrance du brevet:
**27.12.90 Bulletin 90/52**

(84) Etats contractants désignés:
**DE GB IT NL SE**

(56) Documents cités:
**OPTICAL COMMUNICATION, ECOC '84, Tenth European Conference on Optical Communication, Stuttgart, 3-6 septembre 1984, pages 44-45, H. Haupt, Amsterdam, NL; J. CTYROKY et al.: "Thin-film polarizer for optical waveguides"**

**OPTICS LETTERS, vol. 10, no. 6, juin 1985, pages 288-290, Optical Society of America, New York, US; K. THYAGARAJAN et al.: "Experimental demonstration of TM mode-attenuation resonance in planar metal-clad optical waveguides"**

**JOURNAL OF LIGHTWAVE TECHNOLOGY, vol. LT-2, no. 4, aou7t 1984, pages 528-530, IEEE, New York, US; B. ZHANG et al.: "C2F6 reactive ion-beam etching of LiNb03 and Nb205 and their application to optical waveguides"**

(73) Titulaire: **THOMSON-CSF**
**51, Esplanade du Général de Gaulle**
**F-92800 Puteaux (FR)**

(72) Inventeur: **Papuchon, Michel**
**THOMSON-CSF SCPI 19, avenue de Messine**
**F-75008 Paris (FR)**
Inventeur: **Enard, Alain**
**THOMSON-CSF SCPI 19, avenue de Messine**
**F-75008 Paris (FR)**
Inventeur: **Vatoux, Sylvie**
**THOMSON-CSF SCPI 19, avenue de Messine**
**F-75008 Paris (FR)**
Inventeur: **Werner, Michel**
**THOMSON-CSF SCPI 19, avenue de Messine**
**F-75008 Paris (FR)**

(74) Mandataire: **Lepercque, Jean et al**
**THOMSON-CSF SCPI**
**F-92045 PARIS LA DEFENSE CEDEX 67 (FR)**

(56) Documents cités:
**APPLIED OPTICS, vol. 23, no. 17, 1er septembre 1984, pages 2985-2987; R.F. CARSON et al.: "Polarization effects in silicon-clad optical waveguides"**

Courier Press, Leamington Spa, England.

**Description**

L'invention concerne un polariseur par absorption différentielle réalisé en optique intégrée. Elle concerne également le procédé de réalisation d'un tel polariseur.

Plusieurs techniques ont été proposées et expérimentalement verifiées pour réaliser un élément polariseur en optique intégrée. Schématiquement, celles-ci peuvent se regrouper en deux catégories:

— L'élimination de l'une des polarisations transverse électrique TE ou transverse magnétique TM par absorption différentielle;

— la séparation spatiale des deux polarisations, l'une restant guidée et l'autre étant placée à la coupure.

En général, le deuxième type de polariseur conduit à des configurations complexes dont certaines ne sont pas toujours compatibles avec la géométrie planaire de l'optique intégrée. A ce titre, on peut citer comme exemple, l'utilisation à la surface du guide d'ondes d'un cristal anisotrope dont l'un des indices de réfraction serait, pour l'une des polarisations optiques, supérieur à l'indice de réfraction du guide d'ondes. On trouvera une description d'un tel système dans l'article "Anisotropic Polarizers for Ti:LiNb03 Strip Waveguides" de M. Papuchon et al publié dans Technical Digest le 24—26 avril 1984 (Kissimmee, Floride 7ème topical meeting Integrated and Guided-wave Optics-WC5).

Dans d'autres cas, on peut utiliser les propriétés d'anisotropie du substrat lui-même (ex.: LiNb03) pour obtenir in situ l'effet désiré. On peut en effet montrer que, dans le cas de LiNb03, si l'axe optique est dans le plan du substrat, pour certains angles des guides d'ondes avec cet axe optique, la propagation des ondes "quasi TE" s'effectue avec des pertes pouvant être très importantes (>50 dB sur 10 mm démontrées en laboratoire). Cette configuration peut constituer un inconvénient lors de l'intégration d'autres fonctions aux caractéristiques paticulières.

L'invention utilise donc l'élimination de l'une des polarisations, transverse magnétique TM ou transverse électrique TE, par absorption différentielle.

Des polariseurs utilisant cet effet sont connus dans la technique.

Dans ces polariseurs, un effet de polarisation est obtenu en créant une absorption différentielle entre les modes polarisés quasi TE et quasi TM grâce à la forte atténuation qui peut être induite sur l'onde TM, et cela en utilisant une couche métallique. Pour augmenter l'efficacité de l'interaction, on doit insérer une couche tampon diélectrique entre le métal et le guide d'ondes. Les paramètres optogéométriques de cette couche dépendent en général de façon critique des constantes optiques du métal utilisé. C'est le cas en particulier de l'épaisseur de la couche tampon de diélectrique qui doit être définie avec une grande précision (environ 100 Å) L'article de K. Thyagarajan et al ayant pour titre "Experimental Demonstration of TM Mode-Attenuation Resonance in Planar Metal-Clad Optical Waveguides" publié dans Optics Letters volume 10, number 6, en juin 1985, pages 288 à 290, met en évidence l'importance de l'épaisseur de la couche tampon de diélectrique pour obtenir un rendement efficace de la polarisation. L'obtention de cette épaisseur particulière est en général difficile à réaliser.

Pour essayer de remédier à cet inconvénient, une disposition connue prévoit de biseauter la couche tampon de diélectrique comme cela est décrit dans l'article "Experiment Studies of Metal-Clad Tapered Optical Waveguides" de C. Nguyen et al publié dans Electronics Letters du 24 mai 1984, volume 20, N° 11, p. 439.

De cette façon, le mode à absorber trouvera dans l'épaisseur biseautée de la couche diélectrique une épaisseur adaptée à une meilleure absorption.

Cependant une telle structure biseautée est difficile à obtenir et, de plus, ne permet pas toujours d'obtenir un bon rendement.

C'est pourquoi l'invention fournit un polariseur facile à réaliser et permettant d'obtenir une polarisation efficace.

L'invention concerne donc un polariseur par absorption différentielle réalisé en optique intégrée, ledit polariseur comportant:

— un substrat d'un premier indice portant, sur une face, une première couche d'un matériau guidage d'un deuxième indice, capable de supporter au moins un mode de polarisation transverse électrique TE et au moins un mode de polarisation transverse magnétique TM;

— une deuxième couche d'un matériau diélectrique d'un troisième indice recouvrant ladite première couche de guidage, et dont la face opposée à la face commune avec la première couche de matériau de guidage possède au moins une zone inclinée par rapport au plan de la face et s'étendant le long de la direction de propagation dans ladite couche de guide, et

— une troisième couche d'un matériau métallique déposée sur la face de la couche diélectrique possédant ladite zone inclinée, cette troisième couche métallique étant destinée à provoquer, en combinaison avec ladite deuxième couche diélectrique une atténuation par absorption dudit mode TM; et la forme de ladite zone inclinée de ladite deuxième couche étant choisie de façon à ce que cette dernière présente respectivement une épaisseur minimale et une épaisseur maximale dont les valeurs respectives encadrent la valeur de l'épaisseur de résonance pour laquelle ledit mode TM subit une atténuation maximale, ledit polariseur étant caractérisé en ce que la face de ladite deuxième couche diélectrique opposée à la face commune avec la première couche de guidage possède une pluralité de zones inclinées successives s'étendant les une à la suite des autres le long de ladite direction de propagation dans ladite couche de guidage; la forme de chacune desdites zones inclinées étant choisie de façon à ce que les épaisseurs minimale et maximale respectives des portions correspondantes de la deuxième couche diélectrique encadrent ladite épaisseur de résonance.

L'invention concerne également un procédé de réalisation d'un polariseur par absorption différentielle tel que défini ci-dessus, ledit procédé comportant une première phase de dépôt sur un substrat d'une couche d'un matériau de guidage capable de supporter au moins un mode de polarisation transverse électrique TE et au moins un mode de polarisation transverse magnétique TM d'une onde, une deuxième phase de dépôt sur la couche de matériau de guidage d'une couche d'un matériau diélectrique, une troisième phase de dépôt sur la couche de matériau diélectrique d'une couche de matériau métallique, ledit procédé comportant en outre, entre lesdites deuxième et troisième phases, une phase supplémentaire de formage d'une pluralité de zones inclinées successives à la surface de la couche de matériau diélectrique, lesdites zones inclinées successives étant formées de façon à s'étendre les unes à la suite des autres le long de ladite direction de propagation dans ladite couche de guidage, et la forme de chacune de ces zones étant choisie de façon que les épaisseurs minimale et maximale respectives de la portion correspondante de la deuxième couche diélectrique encadrent ladite épaisseur de résonance pour laquelle ledit mode TM subit une atténuation maximale.

Les différents objets et caractéristiques de l'invention vont être détaillés dans la description qui va suivre faite à titre d'exemple, en se reportant aux figures annexées qui représentent:

— La figure 1, un polariseur de l'art connu possédant une couche tampon de diélectrique d'épaisseur uniforme;

— la figure 2, un polariseur de l'art connu possédant une couche de diélectrique en forme de biseau;

— la figure 3, un exemple de réalisation d'un polariseur selon l'invention;

— la figure 4, une courbe de transmission illustrant le fonctionnement en absorption d'un polariseur pour différentes épaisseurs de la couche diélectrique tampon,

— la figure 5, un exemple d'une variante de réalisation d'un polariseur selon l'invention;

— la figure 6, un exemple de réalisation d'un appareil mettant en oeuvre le procédé de l'invention;

— la figure 7, une vue en coupe AA de la figure 6;

— la figure 8, un schéma détaillé montrant le rôle de chaque fil de la grille demasquage de l'appareil des figures 6 et 7.

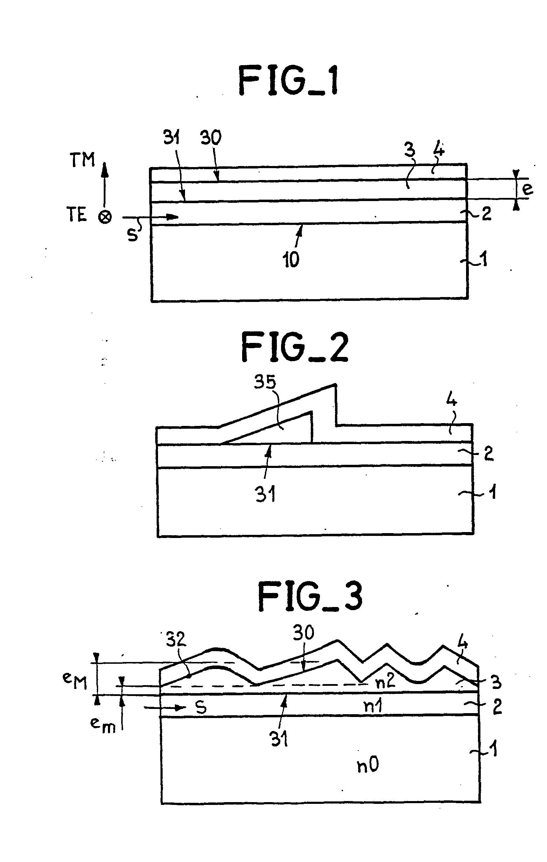

En se reportant à la figure 1, on va tout d'abord décrire un polariseur d'un type connu dans la technique.

Ce polariseur possède sur une face 10 d'un substrat 1, une couche 2 d'un matériau de guidage. Dans cette couche est injectée, par des moyens non représentés et qui sortent du cadre de l'invention, une onde lumineuse S possédant des modes de polarisation transverse électrique (TE) et transverse magnétique (TM). Ces modes de polarisation sont orthogonaux et sont représentés sur la gauche de la figure 1. La couche 2 est revêtue d'une couche tampon de diélectrique 3, laquelle est revêtue sur sa face 30 d'une couche métallique 4.

L'indice de réfraction n1 du matériau de guidage de la couche 2 est supérieur à l'indice de réfraction n0 du substrat et supérieur à l'indice de réfraction n2 de la couche de diélectrique 3:

$$n1 > n0 > n2$$

Dans ces conditions, une onde lumineuse est guidée dans la couche de guidage 2.

On sait dans la technique, que selon la valeur de l'indice de réfraction n2 du diélectrique 3 et pour une épaisseur e déterminée de la couche 3, la composante transverse magnétique TM de l'onde S est partiellement absorbée. L'absorption est d'autant plus efficace que l'épaisseur e de la couche 3 se rapproche d'une épaisseur $e_r$ appelée épaisseur de résonance.

Cette épaisseur de résonance, pour conduire à une bonne absorption, doit être obtenue de façon très précise avec des tolérances de réalisation difficiles à respecter. C'est pourquoi il a été prévu (cf. Figure 2), au lieu de prévoir une épaisseur constante de la couche 3, de prévoir un élément en matériau diélectrique 35 possédant une face inclinée par rapport à la face 31 en contact avec la couche guide d'onde 2. Les dimensions de l'élément 35 sont telles que, compte-tenu de son indice de réfraction n2, son épaisseur maximale est légèrement supérieure à l'épaisseur de résonance $e_r$.

Lors de la transmission de l'onde, la composante transverse magnétique sera absorbée avec un maximum d'absorption dans la section de l'élément 35 correspondant à cette épaisseur de résonance.

Cependant, un tel élément 35 ne fournit pas toujours un rendement d'absorption suffisant et l'invention fournit un polariseur facile à réaliser et permettant une amélioration nette du rendement de l'absorption et donc un polariseur plus efficace.

En se reportant à la figure 3, on va donc maintenant décrire un exemple de réalisation d'un polariseur selon l'invention.

Comme les polariseurs décrits précédemment en se reportant aux figures 1 et 2, le polariseur de l'invention comporte sur un substrat 1 d'indice de réfraction n0, une couche d'un matériau de guidage 2 d'indice n1.

Selon l'invention, le polariseur de la figure 3 possède une couche 3 d'un matériau diélectrique dont une face 31 est commune avec la couche de matériau de guidage 2 et la face opposée 30 possède une pluralité de zones inclinées telle que la zone 32. La face 30 a donc une allure irrégulière qui procure à la section droite du polariseur, selon la direction de propagation d'une onde S, un profil présentant plusieurs zones inclinées successives.

Les ondulations obtenues sont telles que l'épaisseur minimale $e_m$ existant entre un creux de la face 30 et la face opposée 31, et l'épasseur maximale $e_M$ existant entre une bosse de la face 30 et la face opposée 31, encadrent la valeur de l'épaisseur de résonance $e_r$:

$$e_m < e_r < e_M$$

Chaque zone inclinée 32 délimite donc un volume de matériau diélectrique, compris entre cette zone 32 et la face 31, d'épaisseur variable encadrant l'épaisseur de résonance $e_r$ du matériau.

La face 31 est ensuite métallisée par une couche 4 comme précédemment.

Une onde S se propageant dans la couche guide d'onde 2 verra donc sa composante transverse magnétique susceptible d'être absorbée plusieurs fois, c'est-à-dire à chaque passage sous une zone inclinée telle que 32 de la couche diélectrique 3.

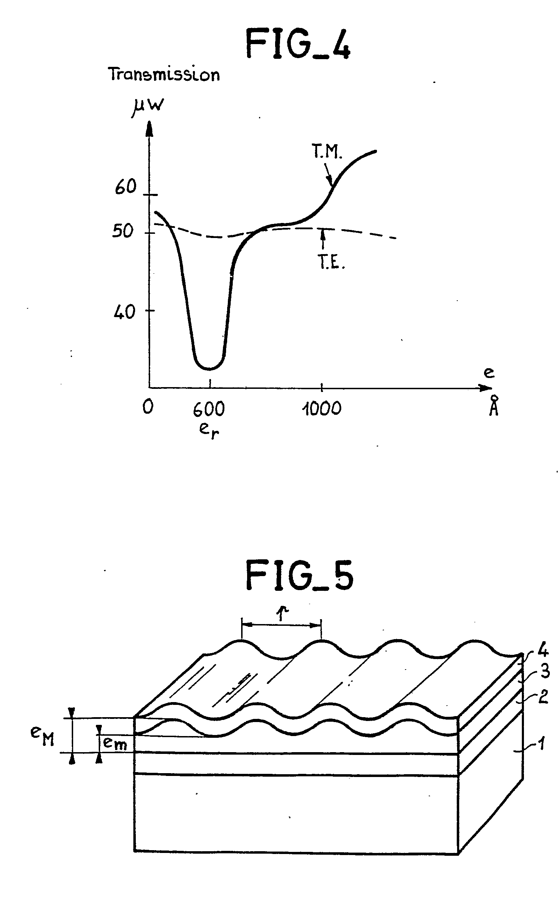

En effet, les courbes de la figure 4 mettent en évidence que pour une épaisseur $e_r$ de la couche de diélectrique 3, la transmission de la composante transverse magnétique TM est minimale et son absorption est donc maximale. Par contre, la transmission de la composante transverse électrique n'est pas affectée et ne subit pas d'absorption.

Dans ces conditions, le polariseur de l'invention fournit une efficacité améliorée par rapport aux polariseurs de type connu.

Sur la figure 3, la surface 30 de la couche de matériau électrique 30 est irrégulière. Cependant, selon un autre exemple de réalisation elle peut présenter l'allure d'une ondulation régulière ayant un pas p constant, voire même une ondulation sinusoïdale, déterminant des épaisseurs minimale $e_m$ et maximale $e_M$ de la couche 3 répondant à la condition:

$$e_m < e_r < e_M.$$

A titre d'exemple, la couche 2 peut être en matériau cristallin du type $LiNbO_3$ d'épaisseur 2,5 à 3 µm. La couche de matériau diélectrique 3 peut être un oxyde d'Yttrium d'indice de réfraction $n2 = 1,85$. Pour cet indice de réfraction, l'épaisseur de résonance est environ $e_r = 929$ Å.

Pour réaliser un tel polariseur, l'invention prévoit un procédé comportant les phases suivantes:

— dépôt sur un substrat 1 d'une couche 2 de guidage $LiNbO_3$, par tout procédé connu dans la technique telle qu'une hétéroépitaxie en phase vapeur ou une croissance épitaxiale ou un dopage par un ion métallique adéquat tel que le titane;

— dépôt d'une couche d'un liquide organométallique contenant par exemple du titane ou du silicium ou une proportion de ces deux matériaux;

— chauffage par évaporation et oxygénation de la couche liquide pour obtenir une couche 3 d'oxyde;

— formage dans la couche 3 de zones inclinées 32;

— dépôt sur la couche 3 d'une couche 4 métallique par projection ou évaporation par exemple.

Le formage de la couche 3 en zones inclinées 32 peur se faire par matriçage de la surface 30 après chauffage préliminaire de la couche liquide et avant durcissement complet de cette couche.

Le formage peut se faire également après durcissement de la couche 3, par usinage ionique.

Dans le cas où la couche 3 est composée d'oxyde d'Yttrium ou de tout autre matériau adéquat réalisé par dépôt sous vide, le formage de cette couche est effectué par usinage ionique.

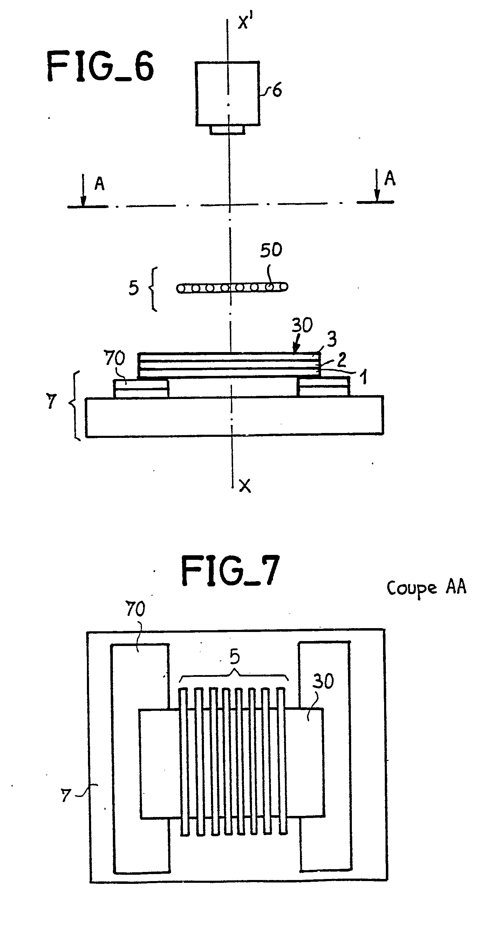

Le procédé de l'invention prévoyant un usinage ionique de la couche 3 peut être mis en oeuvre par l'appareil conforme à l'invention et représenté par les figures 6 et 7.

Cet appareil comporte un bâti 7 permettant de supporter l'élément à traiter. Ce bâti est disposé selon un axe XX'. L'élément à traiter repose sur la bâti 7 par des cales 70 de telle façon que la face 30 de l'élément à traiter soit sensiblement perpendiculaire à l'axe XX'.

Disposé selon cet axe XX', un canon à ions 6 permet de diriger un faisceau d'ions vers la face 30 de la couche 3 de l'élément à traiter.

De plus, une grille demasquage 5 constituée de fils 50 en matériau tel que du tungstène est disposée entre le canon à ions et l'élément à traiter, sur le trajet du faisceau d'ions.

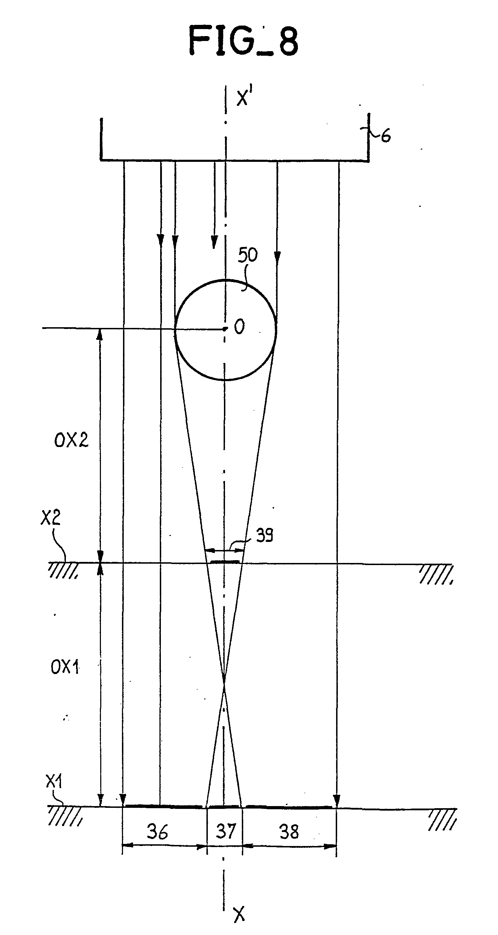

Ainsi, comme représenté en figure 8, un fil 50 placé sur le faisceau d'ions diffracte ce faisceau et procure à une distance déterminée OX1 de la grille, sur la surface 30 de la couche 3 une attaque plus ou moins importante. C'est ainsi que dans la zone 37 on aura un usinage différent que dans les zones 36 et 38 et on obtient avec la grille 5 une surface usinée d'allure sensiblement sinusoïdale.

Si la surface 30 est placée plus près de la grille 5, à une distance OX2 du fil 50, on observe une zone d'ombre (39) dans laquelle la surface n'est pas attaquée.

A titre d'exemple, on a réalisé un polariseur possédant une surface 30 possédant une ondulation de forme sinusoïdale à l'aide d'un implanteur ionique 6 fonctionnant sous une haute tension de 1000 volts et procurant une densité ionique de 0,5 $mA/cm^2$ avec une pression de la source ionique de $5 \times 10^{-4}$ T en utilisant comme gaz de l'Argon.

La distance OX1 entre la surface 30 de la couche 3 et la grille de masquage 5 a été prise égale à 16 cm.

La grille utilisée était constituée de fils de tungstène rectilignes et parallèles de diamètre 0,1 mm disposés selon un pas de 0,4 mm.

Le liquide organomètallique utilisé comprenant deux volumes de liquide à base de titane pour un volume de liquide à base de silicium.

Avec une durée d'usinage de 3 minutes, on a obtenu dans ces conditions de fonctionnement une gravure sensiblement sinusoïdale dont la profondeur crête à crête est d'environ 500 Angstroems.

Ces exemples numériques n'ont été donnés qu'à titre d'exemple et d'autres réalisations peuvent être envisagées dans d'autres conditions de manipulation.

**Revendications**

1. Polariseur par absorption différentielle réalisé en optique intégrée, comportant:
— un substrat (1) d'un premier indice (n0) portant, sur une face (10), une première couche d'un matériau de guidage (2) d'un deuxième indice (n1), capable de supporter au moins un mode de polarisation transverse électrique TE et au moins un mode de polarisation transverse magnétique TM;
— une deuxième couche d'un matériau diélectrique (3) d'un troisième indice (n2) recouvrant ladite première couche de guidage (2), et dont la face (30) opposée à la face (31) commune avec la première couche de matériau de guidage (2) possède au moins une zone (32) inclinée par rapport au plan de la face (30) et s'étendant le long de la direction de propagation dans ladite couche de guidage (2), et
— une troisième couche (4) d'un matériau métallique déposée sur la face (30) de la couche diélectrique (3) possédant ladite zone inclinée (32), cette troisième couche métallique (4) étant destinée à provoquer, en combinaison avec ladite deuxième couche diélectrique (3), une atténuation par absorption dudit mode TM; et la forme de ladite zone inclinée (32) de ladite deuxième couche (3) étant choisie de façon à ce que cette dernière présente respectivement une épaisseur minimale (em) et une épaisseur maximale (eM) dont les valeurs respectives encadrent la valeur de l'épaisseur de résonance (er) pour laquelle ledit mode TM subit une atténuation maximale, ledit polariseur étant caractérisé en ce que la face (30) de ladite deuxième couche diélectrique (3) opposée à la face (31) commune avec la première couche de guidage (2) possède une pluralité de zones inclinées successives (32) s'étendant les unes à la suite des autres le long de ladite direction de propagation dans ladite couche de guidage (2); la forme de chacune desdites zones inclinées (32) étant choisie de façon à ce que les épaisseurs minimale et maximale respectives des portions correspondantes de la deuxième couche diélectrique (3) encadrent ladite épaisseur de résonance (er).

2. Polariseur par absorption selon la revendication 1, caractérisé en ce que les zones inclinées (32) ont sensiblement la même pente et la même forme.

3. Polariseur par absorption selon la revendication 1, caractérisé en ce que les zones inclinées (32) présentent à la surface du diélectrique (3) un pas régulier (p).

4. Polariseur par absorption selon l'une quelconque des revendications précédentes, caractérisé en ce que les zones inclinées (32) constituent une surface ondulée (33) sur la couche de matériau diélectrique (3).

5. Polariseur par absorption selon la revendication 4, caractérisé en ce que la surface ondulée (33) a une forme générale sinusoïdale.

6. Polariseur par absorption selon la revendication 1, caractérisé en ce que la couche (3) de matériau diélectrique comporte un oxyde.

7. Polariseur par absorption selon la revendication 6, caractérisé en ce que ledit oxyde est un mélange de silice et d'oxyde de titane.

8. Procédé de réalisation d'un polariseur par absorption différentielle selon l'une quelconque des revendications précédentes, caractérisé en ce qu'il comporte une première phase de dépôt sur un substrat (1) d'une couche d'un matériau de guidage (2) capable de supporter au moins un mode de polarisation transverse électrique TE et au moins un mode de polarisation transverse magnétique TM d'une onde, une deuxième phase de dépôt sur la couche de matériau de guidage (2) d'une couche d'un matériau diélectrique (3), une troisième phase de dépôt sur la couche de matériau diélectrique (3) d'une couche de matériau métallique, ledit procédé comportant en outre, entre lesdites deuxième et troisième phases, une phase supplémentaire de formage d'une pluralité de zones inclinées successives (32) à la surface (30) de la couche de matériau diélectrique (3), lesdites zones inclinées successives étant formées de façon à s'étendre les unes à la suite des autres de long de ladite direction de propagation dans ladite couche de guidage (2), et la forme de chacune de ces zones étant choisie de façon que les épaisseurs minimale et maximale respectives de la portion correspondante de la deuxième couche diélectrique (3) encadrent ladite épaisseur de résonance (er) pour laquelle ledit mode TM subit une atténuation maximale.

9. Procédé de réalisation d'un polariseur selon la revendication 8, caractérisé en ce que la deuxième phase de dépôt d'une couche (3) d'un matériau diélectrique comporte une étape de dépôt d'une couche d'un liquide organométallique suivie d'une étape d'évaporation et d'oxydation par chauffage de ladite couche de liquide.

10. Procédé de réalisation d'un polariseur selon la revendication 9, caractérisé en ce que la phase supplémentaire de formage comporte une opération d'estampage de ladite couche (3) de matériau diélectrique après chauffage préliminaire de la couche liquide et avant son durcissement complet.

11. Procédé de réalisation d'un polariseur selon la revendication 9, caractérisé en ce que le liquide organométallique comporte du titane.

12. Procédé de réalisation d'un polariseur selon la revendication 9, caractérisé en ce que le liquide organométallique comporte du silicium.

13. Procédé de réalisation d'un polariseur selon la revendication 9, caractérisé en ce que le liquide organométallique comporte du titane et du silicium.

14. Procédé de réalisation d'un polariseur selon la revendication 8, caractérisé en ce que la phase supplémentaire de formage comporte une opération d'usinage ionique.

15. Procédé de réalisation d'un polariseur selon la revendication 14, caractérisé en ce que l'opération d'usinage ionique se fait à travers une grille de masquage de façon que l'attaque des ions à la surface de la couche de diélectrique (3) se fasse de façon non uniforme.

**Patentansprüche**

1. Differential-Absorptionspolarisator auf der Basis integrierter Optik, mit:

— einem Substrat (1) eines ersten Brechungsindex (n0), das auf einer Fläche (10) eine erste Schicht aus einem Leitmaterial (2) mit einem zweiten Index (n1) trägt, das mindestens einen elektrischen transversal polarisierten Wellentyp TE und mindestens einen magnetischen transversal polarisierten Wellentyp führt;

— einer zweiten Schicht aus einem dielektrischen Material (3) mit einem dritten Index (n2), das die erste Schicht (2) aus Leitmaterial bedeckt und deren Seite (30), die der mit der ersten Leitmaterialschicht (2) gemeinsamen Seite (31) gegenüberliegt, mindestens eine Zone (32) besitzt, die relativ zur Ebene der Seite (30) geneigt ist und sich in Richtung der Wellenausbreitung in der Leitschicht (2) erstreckt, und

— einen dritten Schicht (4) aus einem metallischen Material, die auf die Seite (30) der die geneigte Zone (32) besitzenden dielektrischen Schicht (3) aufgebracht ist, wobei diese dritte Metallschicht (4) dazu bestimmt ist, zusammen mit der zweiten dielektrischen Schicht (3) eine Absorptionsdämpfung des TM-Wellentyps zu bewirken, und wobei die Form der geneigten Zone (32) der zweiten Schicht (3) derart gewählt ist, daß die letztere eine Minimaldicke (em) bzw. eine Maximaldicke (eM) besitzt, deren Werte den Wert der Resonanzdicke (er) zwischen sich einschließen, bei dem der TM-Wellentyp eine maximale Dämpfung erfährt, dadurch gekennzeichnet, daß die Seite (30) der zweiten dielektrischen Schicht (3), die der mit der ersten Schicht (2) aus Leitmaterial gemeinsamen Seite (31) gegenüberliegt, eine Vielzahl aufeinanderfolgender geneigter Zonen (32) besitzt, die sich hintereinander in Wellenausbreitungsrichtung durch die Schicht (2) aus Leitmaterial erstrecken, wobei die Form jeder dieser geneigten Zonen (32) so gewählt ist, daß die jeweiligen Minimal-bzw. Maximaldicken der entsprechenden Abschnitte der zweiten dielektrischen Schicht (3) die Resonanzdicke (er) zwischen sich einschließen.

2. Absorptionspolarisator nach Anspruch 1, dadurch gekennzeichnet, daß die geneigten Zonen (32) im wesentlichen die gleiche Neigung und die gleiche Form besitzen.

3. Absorptionspolarisator nach Anspruch 1, dadurch gekennzeichnet, daß die geneigten Zonen (32) an der Oberfläche des Dielektrums (3) eine regelmäßige Periodizität (p) besitzen.

4. Absorptionspolarisator nach einem beliebigen der vorhergehenden Ansprüche, dadurch gekennzeichnet, daß die geneigten Zonen (32) eine gewellte Oberfläche (33) auf der dielektrischen Materialschicht (3) bilden.

5. Absorptionspolarisator nach Anspruch 4, dadurch gekennzeichnet, daß die gewellte Oberfläche (33) eines allgemein sinusförmige Gestalt besitzt.

6. Absorptionspolarisator nach Anspruch 1, dadurch gekennzeichnet, daß die dielektrische Materialschicht (3) ein Oxid aufweist.

7. Absorptionspolarisator nach Anspruch 6, dadurch gekennzeichnet, daß das Oxid aus einer Mischung aus Siliziumoxid und Titanoxid besteht.

8. Verfahren zur Herstellung eines Differential-Absorptionspolarisators nach einem beliebigen der vorhergehenden Ansprüche, dadurch gekennzeichnet, daß in einer erste Phase eine Schicht aus einem Leitmaterial (2) auf einem Substrat (1) augebracht wird, die mindestens einen elektrischen transversal polarisierten Wellentyp TE und mindestens einen magnetischen transversal polarisierten Wellentyp TM einer Welle führt, daß in einer zweiten Phase eine Schicht (3) aus dielektrischem Material auf die Leitmaterialschicht (2) aufgebracht wird, daß in einer dritten Phase eine metallische Schicht auf die dielektrische Materialschicht (3) aufgebracht wird, daß weiter zwischen der zweiten und der dritten Phase in einer zusätzlichen Phase eine Vielzahl aufeinanderfolgender geneigter Zonen (32) auf der Oberfläche (30) der dielektrischen Materialshicht (3) gebildet werden, wobei die aufeinderfolgenden geneigten Zonen derart ausgebildet sind, daß sie sich hintereinander in Wellenausbreitungsrichtung in der Schicht (2) aus Leitmaterial erstrecken wobei die Form jeder dieser Zonen so gewählt ist, daß die Minimal- und Maximaldicken des entsprechenden Abschnitts der zweiten dielektrischen Schicht (3) die Resonanzdicke (er) zwischen sich einschließen, bei der der TM-Wellentyp eine maximale Dämpfung erfährt.

9. Verfahren zur Herstellung eines Polarisators nach Anspruch 8, dadurch gekennzeichnet, daß in der zweiten Phase des Auftragens einer Schicht (3) aus dielektrischem Material auch eine Schicht aus einer organometallischen Flüssigkeit aufgebracht wird, auf die ein Verdampfungs- und Oxidationsschritt durch Erwärmen der Flüssigkeitsschicht folgt.

10. Verfahren zur Herstellung eines Polarisators nach Anspruch 9, dadurch gekennzeichnet, daß die zusätzliche Bildungsphase eine Prägebehandlung der dielektrischen Materialschicht (3) nach vorheriger Erwärmung der flüssigen Schicht und vor ihrer vollständigen Aushärtung enthält.

11. Verfahren zur Herstellung eines Polarisators nach Anspruch 9, dadurch gekennzeichnet, daß die organometallische Flüssigkeit Titan enthält.

12. Verfahren zur Herstellung eines Polarisators nach Anspruch 9, dadurch gekennzeichnet, daß die organometallische Flüssigkeit Silizium enthält.

13. Verfahren zur Herstellung eines Polarisators nach Anspruch 9, dadurch gekennzeichnet, daß die organometallische Flüssigkeit Titan und Silizium enthält.

14. Verfahren zur Herstellung eines Polarisators nach Anspruch 8, dadurch gekennzeichnet, daß die zusätzliche Bildungsphase eine Ionenbearbeitungsoperation umfaßt.

15. Verfahren zur Herstellung eines Polarisators nach Anspruch 14, dadurch gekennzeichnet, daß die Ionenbearbeitungsoperation durch eine Gittermaske erfolgt, derart, daß der Ionenangriff auf die Oberfläche der dielektrischen Schicht (3) umgleichmäßig erfolgt.

## Claims

1. A differential-absorption polarizer, designed in integrated optics technology and comprising:
— a substrate (1) having a first refraction index (n0) and carrying on one face (10) a first layer of a guide material (2) having a second index (n1), capable of supporting at least one electric transversal polarization mode TE and at least one magnetic transversal polarization mode TM;
— a second layer (3) of a dielectric material having a third index (n2) which covers said first guide layer (2), and whose face (30) opposite to the face (31) common with the first guide material layer (2) presents at least one inclined zone (32) in relation to the plane of the face (30), this zone extending along the direction of wave propagation in said guide layer (2), and
— a third layer (4) of a metal material deposited on the face (30) of the dielectric layer (3) presenting said inclined zone (32), said third metal layer (4) being intended to cause in conjunction with said second dielectric layer (3) an attenuation by absorption of said TM-mode, the shape of said inclined zone (32) of said second layer (3) being chosen such, that said latter layer has respectively a minimum thickness (em) and a maximum thickness (eM), which are smaller and larger respectively than the resonance thickness (er) in the presence of which the TM-mode is subjected to a maximum attenuation, characterized in that the face (30) of said second dielectric layer- (3) opposite to the face (31) common with the first guide layer (2) presents a plurality of successive inclined zones (32) which extend one after the other along said direction of propagation in said guide layer (2), the shape of said inclined zones being chosen such, that the minimum and maximum thicknesses of the second dielectric layer (3) are smaller and larger respectively than said resonance thickness (er).

2. An absorption polarizer according to claim 1, characterized in that the inclined zones (32) have substantially the same inclination and the same shape.

3. An absorption polarizer according to claim 1, characterized in that the inclined zones (32) present a regular pitch (p) on the surface of the dielectric layer (3).

4. An absorption polarizer according to anyone of the preceding claims, characterised in that the inclined zones (32) constitute an ondulated surface (33) on the layer (3) of dielectric material.

5. An absorption polarizer according to claim 4, characterized in that the ondulated surface (33) has a generally sinusoidal shape.

6. An absorption polarizer according to claim 1, characterized in that the dielectric material comprises an oxide.

7. An absorption polarizer according to claim 6, characterized in that said oxide is a mixture of silica and titanium oxide.

8. A method for manufacturing a differential-absorption polarizer according to anyone of the preceding claims, characterized in that it comprises a first phase of depositing a layer (2) of guide material on a substrate (1) capable of supporting at least one electric transversal polarization mode TE and at least one magnetic transversal polarization mode TM of a wave, a second phase of depositing a layer (3) of dielectric material on the guide material layer (2), a third phase of depositing a metal layer on the dielectric material layer (3), said method comprising, in addition, between said second and third phases, a supplementary phase for forming a plurality of successive inclined zones (32) on the surface (30) of the dielectric material layer (3), said successive inclined zones being formed in such a way as to extend one after the other along said direction of propagation in said guide layer (2), and the shape of each of said zones being chosen such, that the minimum and maximum thicknesses of the corresponding portion of the second dielectric layer (3) are smaller and larger respectively than said resonance thickness (er), for which said TM-mode is subjected to a maximum attenuation.

9. A method of manufacturing a polarizer according to claim 8, characterized in that the second phase of depositing a layer (3) of a dielectric material comprises a step in which a layer of an organometallic liquid is deposited and then this layer is evaporated and oxidized by way of heating said liquid layer.

10. A method of manufacturing a polarizer according to claim 9, characterized in that the additional formation phase comprises an operation of stamping said layer (3) of dielectric material subsequent to a preliminary heating of the liquid layer and prior to its complete hardening.

11. A method of manufacturing a polarizer according to claim 9, characterized in that the organometallic liquid comprises titanium.

12. A method of manufacturing a polarizer according to claim 9, characterized in that the organometallic liquid comprises silicon.

13. A method of manufacturing a polarizer according to claim 9, characterized in that the organometallic liquid comprises titanium and silicon.

14. A method of manufacturing a polarizer according to claim 8, characterized in that the additional forming phase comprises an operation of ion etching.

15. A method of manufacturing a polarizer according to claim 14, characterized in that the operation of ion etching is made through a masking grid, such, that the ion attack on the surface of the dielectric layer (3) is carried out irregularly.

# FIG_1

# FIG_2

# FIG_3

## FIG_4

Transmission

## FIG_5

FIG_6

X'

6

A A

50

5 {

30

70

3

2

1

7 {

X

FIG_7

Coupe AA

70

5

30

7

# FIG_8